# EUROPÄISCHE PATENTSCHRIFT

(11) **EP 1 957 851 B1**
(45) Veröffentlichungstag und Bekanntmachung des Hinweises auf die Patenterteilung: **06.10.2010**
(21) Anmeldenummer: 06791575.1
(22) Anmeldetag: 12.08.2006
(51) Int. Cl.: F16L 39/00

(54) **STECKKUPPLUNG FÜR KRYOLEITUNGEN**
PLUG-IN COUPLING FOR CRYOGENIC LINES
ACCOUPLEMENT ENFICHABLE POUR CONDUITS CRYOGENIQUES

(30) Priorität: 10.12.2005 DE 102005059089
(43) Veröffentlichungstag der Anmeldung: 20.08.2008
(73) Patentinhaber: Nexans, 75008 Paris (FR)
(72) Erfinder: LANGE, Stephan, 30900 Wedemark (DE); FROHNE, Christian, 30657 Hannover (DE); DI PALMA, Michele, 31832 Springe (DE); SCHIPPL, Klaus, 30659 Hannover (DE)
(74) Vertreter: Döring, Roger
(86) Internationale Anmeldenummer: PCT/EP2006/008007
(87) Internationale Veröffentlichungsnummer: WO 2007/065492

(56) Entgegenhaltungen:
- DE-A1- 4 107 652
- US-A1- 2002 089 177

## Beschreibung

Die Erfindung betrifft eine Steckkupplung für Kyroleitungen, entsprechend der Merkmale des Oberbegriffs aus Anspruch 1 (DE 4107652 A1). Derartige Kupplungen, die auch als Johnston-Kupplung bezeichnet werden, werden allgemein in vakuumisolierten Leitungssystemen eingesetzt, welche zum Transport von kryogenen Medien verwendet werden. Durch die Elemente der Kupplung, die zweckmäßigerweise doppelwandig und vakuumisoliert ausgebildet sind, wird eine größere räumliche Entfernung zwischen der Verbindungsstelle der beiden äußeren Kupplungselemente und der Stelle, an welcher der Übertritt des kryogenen Mediums von der einen in die andere Leitung erfolgt, geschaffen. Dadurch sollen eine Vereisung der Kupplungsstelle und Verluste des kryogenen Mediums durch Verdampfung verringert werden. Bei einer solchen Kupplung wird der Kupplungsstecker auch als "Mole-Teil" und die dazugehörige Kupplungsbuchse auch als "Female-Teil" bezeichnet.

Aus der DE-A-3142702 ist eine Steckkupplung für die Innenrohre einer vakuumisolierten Rohrleitung bekannt, bei der die Innenrohre nach Art einer Male-Female-Verbindung zusammengesteckt sind. Bei dieser Verbindung kann an der stirnseitigen Verbindung der Rohre Flüssigkeit austreten und in den Ringspalt zwischen den Rohren der Steckverbindung eintreten und dort verdampfen. Da dieser Ringspalt an seinem anderen Ende abgedichtet ist, baut sich ein Druckpolster auf, welches einen weiteren Austritt von Flüssigkeit aus dem Innenrohr verhindert. Dieses Druckpolster kann sich jedoch nur bei einer zumindest gegenüber der Horizontalen geneigten insbesondere vertikalen Anordnung des Leitungsrohres aufbauen und dann auch nur, wenn das Male-Teil von oben in das Female-Teil eingeführt ist.

Aus der DE-U-84 32 062 ist eine Steckverbindung für Leitungsrohre nach Art einer Male-Female-Verbindung zum Transport von tiefgekühlten Medien bekannt, bei der das innere Steckteil (Male-Teil) aus einem Metall mit einem geringen Ausdehnungskoeffizienten und das äußere Steckteil (Female-Teil) aus einem Metall mit normalem Ausdehnungskoeffizienten besteht. Das innere Steckteil besteht aus einem Stahl mit mehr als 30 % Nickel, wogegen das äußere Steckteil aus Messing, Kupfer oder Edelstahl besteht. Bei dieser Anordnung schrumpft also das äußere der ineinandergesteckten Kupplungsteile auf das innere der Kupplungsteile, wenn das kryogene Medium durch das Leitungsrohr hindurchströmt. Auf diese Weise wird der für das Ineinanderstecken der Kupplungsteile notwendige Ringspalt abgedichtet und ein Entweichen von Flüssigkeit oder Dampf weitestgehend eingeschränkt. Voraussetzung hierfür ist jedoch, daß die einander zugekehrten Oberflächen der Kupplungsteile eine extrem niedrige Rauhigkeit aufweisen. Dennoch ist eine 100 %ige Abdichtung des Ringspaltes nicht zu erreichen, so daß weiter die Gefahr einer Vereisung im "warmen" Bereich der Steckkupplung besteht und somit ein Verlust an der kryogenen Flüssigkeit entsteht.

Der vorliegenden Erfindung liegt die Aufgabe zugrunde, eine lösbare Steckkupplung für Kryoleitungen bereitzustellen, die sich durch extrem geringe Verluste auszeichnet. Insbesondere soll das Entstehen eines Überdrucks im Ringspalt bei einem schnellen Erwärmen der Steckkupplung verhindert werden.

Diese Aufgabe wird durch die in Anspruch 1 erfaßten Merkmale gelöst.

Durch die Anordnung einer Dichtung im "kalten" Bereich der Steckkupplung kann der Eintritt von kryogener Flüssigkeit in den Ringspalt zwischen den Kupplungsteilen bis zum Flansch hin und die daraus folgende Vereisung mit hohem Wärmeeintrag weitestgehend eingeschränkt, wenn nicht sogar verhindert werden. Die Abdichtung im kalten Bereich wird dadurch erreicht und beibehalten, daß eine in längsaxialer Richtung wirkende Kraft in den Dichtkörper eingeleitet wird. Diese Kraft wird über die Flanschverbindung erzeugt. Die Dichtung kann aus Teflon oder aber aus Metall bestehen. Im Flanschbereich wird über eine O-Ringdichtung eine weitere Abdichtung erzeugt. Diese im "warmen" Bereich der Steckkupplung befindliche Ringdichtung ist zwischen den beiden Flanschansätzen angeordnet und macht eine Längsverschiebung der Flansche unter Aufrechterhaltung der Dichtwirkung möglich. Trotz dieser Dichtungen kann unter Umständen Luft oder auch kryogene Flüssigkeit oder Dampf in den Ringspalt eindringen und dort kondensieren. Beim Aufwärmen der Kupplung kann dann ein Überdruck im Ringspalt entstehen, der zu einer Zerstörung der Kupplung führen könnte. Das eingebaute Sicherheitsventil verhindert einen Überdruck im Ringspalt und somit eine Zerstörung der Kupplung. Dieses Sicherheitsventil wird jedoch lediglich für den Extremfall benötigt.

Weitere vorteilhafte Ausgestaltungen der Erfindung sind in den Unteransprüchen erfaßt.

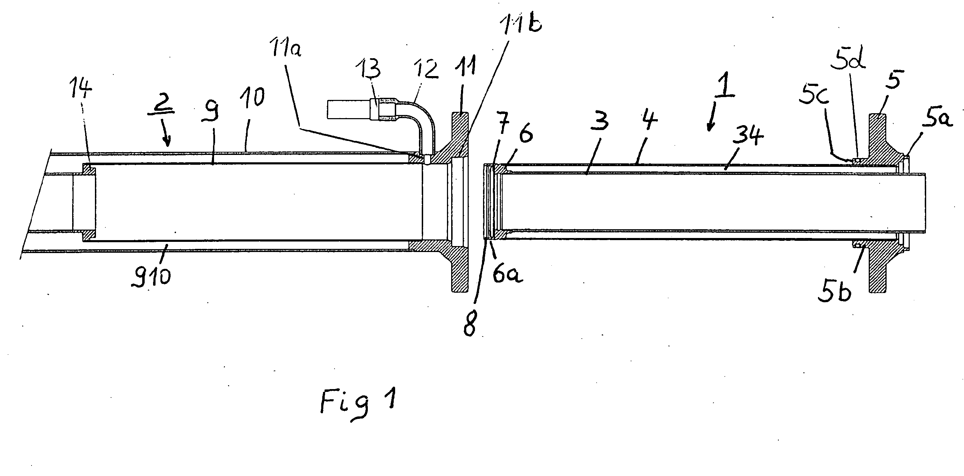

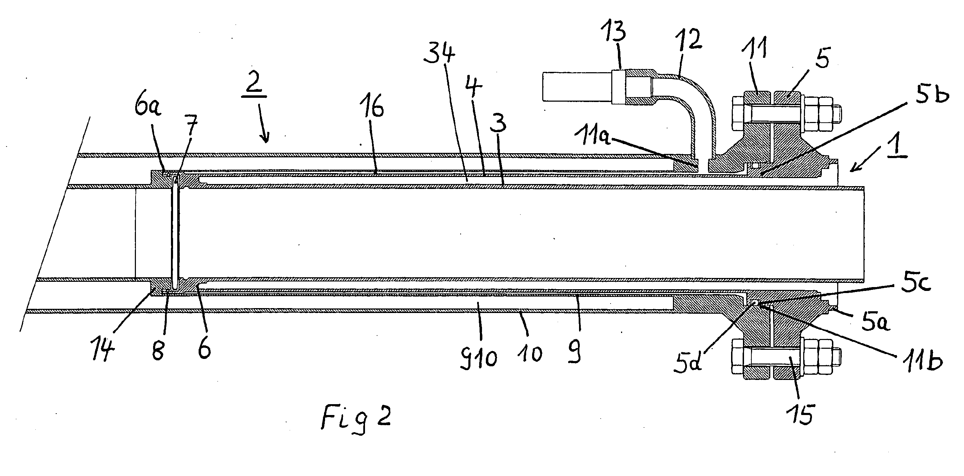

Die Erfindung ist anhand der in den Figuren 1 und 2 schematisch dargestellten Ausführungsbeispiele näher beschrieben.

In der Figur 1 sind die beiden Kupplungselemente 1 und 2 vor dem Zusammenbau dargestellt. Das Bezugszeichen 1 weist auf den Kupplungsstecker, das Male-Teil, wogegen das Bezugszeichen 2 auf die Kupplungsbuchse, das Female-Teil hinweist.

Der Kupplungsstecker 1 besteht aus einem inneren Rohrstück 3 und einem äußeren Rohrstück 4, die zwischen sich einen evakuierten Ringraum 34 einschließen, der mit dem evakuierten Ringraum der nicht dargestellten Kryoleitung verbunden ist. Ein Flansch 5 ist mit einem Ende des äußeren Rohrstücks 4 vakuumdicht verschweißt. Die dem Flansch 5 abgekehrten Enden des inneren Rohrstücks 3 und des äußeren Rohrstücks 4 sind jeweils mit einem Aufnahmeteil 6 vakuumdicht verschweißt. Das Aufnahmeteil 6 weist einen rohrförmigen Vorsprung 6a auf, in welchem ein Dichtring 7 angeordnet ist, der durch einen Sprengring 8 in dem Vorsprung 6a gesichert ist.

Das im Bereich des Flansches 5 befindliche Ende des inneren Rohrstücks 3 ist in nicht dargestellter Weise mit dem Innenrohr der Kryoleitung vakuumdicht verschweißt, während an den Flansch 5 in ebenfalls nicht dargestellter Weise das Außenrohr der Kryoleitung vakuumdicht angeschweißt ist. Zu diesem Zweck weist der Flansch 5 eine Schweißlippe 5a auf.

Die Kupplungsdose 2 besteht ebenfalls aus einem inneren Rohrstück 9 und einem äußeren Rohrstück 10, die an ihrem Ende mit einem Flansch 11 vakuumdicht verschweißt sind. Der Innendurchmesser der Bohrung des Flansches 11 sowie des inneren Rohrstück 9 sind geringfügig größer als der äußere Durchmesser des äußeren Rohrstück 4 des Kupplungssteckers 1. Die dem Flansch 11 abgekehrten Enden der Rohrstücke 9 und 10 sind in nicht dargestellter Weise mit dem Innenrohr bzw. dem Außenrohr der Kryoleitung bzw. einem Zuführstutzen einer Kühlanlage für das kryogene Medium vakuumdicht verschweißt. Der zwischen dem inneren Rohrstück 9 und dem äußeren Rohrstück 10 befindliche Ringraum 910 ist mit dem evakuierten Raum der Kryoleitung verbunden bzw. endseitig abgeschottet.

Der Flansch 5 weist einen der Schweißlippe 5a gegenüberliegenden rohrartigen Ansatz 5b auf, an dessen äußerer Mantelfläche eine Ringnut 5c mit einem darin befindlichen Dichtring 5d vorgesehen ist. An dem Flansch 11 befindet sich eine Bohrung 11a, in welche ein Rohrstück 12 vakuumdicht eingeschweißt ist, an dessen Ende sich ein Sicherheitsventil 13 befindet. Der Flansch 11 zeigt in seiner inneren Bohrung eine Durchmessererweiterung 11 b, in welche der rohrförmige Ansatz 5b des Flansches 5 einführbar ist. Die Kupplungsdose 2 weist noch einen an das dem Flansch 11 abgekehrte Ende des inneren Rohrstücks 9 angeschweißten Anschlag 14 auf, der als Gegenlager für den Dichtring 7 dient.

Die Figur 2 zeigt die Steckkupplung im montierten Zustand. Die beiden Flansche 5 und 11 sind mit Schraubbolzen 15 verbunden. Die Schraubbolzen 15 sind so eingestellt, da β ständig eine in längsaxialer Richtung wirkende Kraft den Dichtring 7 vorspannt und somit den zwischen dem Kupplungsstecker 1 und der Kupplungsdose 2 befindlichen Ringspalt 16 gegenüber dem Innenraum der Kryoleitung abdichtet. Am entgegengesetzten Ende ist der Ringspalt 16 durch den Dichtring 5d abgedichtet. Für den Extremfall, daß dennoch Luft oder kryogenes Medium in den Ringspalt 16 eingedrungen ist, und ein Überdruck in dem Ringspalt 16 entsteht, öffnet das Sicherheitsventil 13 und verhindert eine Zerstörung der Steckkupplung infolge überhöhten Drucks.

Die Erfindung ist anwendbar zur Verbindung von Leitungsrohren zum Transport von kryogenen Medien. Ein besonders bevorzugter Anwendungsbereich ist die Verbindung zwischen einem Supraleiterkabelsystem und einem Endenabschluß.

## Patentansprüche

1. Steckkupplung für Kryoleitungen mit mindestens zwei nach Art einer male/female Verbindung unter Bildung eines Ringspaltes (15) ineinander gesteckten Rohren (3,4,9,10), bei welcher die Rohre (3,4,9,10) durch eine an ihrem "warmen" Ende befindliche Flanschverbindung (5,11) lösbar miteinander verbunden sind, der Ringspalt (16) zwischen dem äußeren Rohr (4) eines Male-Teils (1) und dem inneren Rohr (9) eines Female-Teils (2) am "kalten" Ende durch eine Ringdichtung(7) und am "warmen" Ende durch eine im Bereich der Flanschverbindung (5,11) befindliche Ringdichtung (5d) abgedichtet ist, **dadurch gekennzeichnet, dass** der Ringspalt (16) im Bereich der Flanschverbindung (5,11) mit einem Sicherheitsventil (13) verbunden ist.

2. Steckkupplung nach Anspruch 1, **dadurch gekennzeichnet, daß** das Ende des female-Rohres (9,10) bezüglich seines Innendurchmessers erweitert ist, daß das male-Rohr (3,4) in diesen erweiterten Bereich eindringt und daß die am "kalten" Ende vorgesehene Dichtung (7) zwischen dem Übergangsbereich (14) vom kleineren zum größeren Innendurchmesser und dem Ende des male-Rohres (3,4) durch eine in längsaxialer Richtung wirkende Kraft eingespannt ist.

3. Steckkupplung nach Anspruch 1 oder 2, **dadurch gekennzeichnet, daß** das Sicherheitsventil (13) über ein in den Flansch (11) des female-Rohres (9,10) gasdicht eingelassenes Rohrstück (12) mit dem Ringspalt (16) verbunden ist.

4. Steckkupplung nach einem der Ansprüche 1 bis 3, **dadurch gekennzeichnet, daß** die beiden Flansche der Flanschverbindungen (5,11) elastisch vorgespannt sind.

## Claims

1. A plug-in coupling for cryogenic lines, having at least two pipes (3, 4, 9, 10) fitted one inside the other like a male/female connection while forming an annular gap (16), in which plug-in coupling the pipes (3, 4, 9, 10) are releasably connected to one another by a flange connection (5, 11) located at their "warm" end, the annular gap (16) between the two pipes (4, 9) is sealed at the "cold" end by an annular seal (7) and at the "warm" end by an annular seal (5d) located in the region of the flange connection (5, 11), and the annular gap (16) is connected to a safety valve (13) in the region of the flange connection (5, 11).

2. The plug-in coupling as claimed in claim 1, **characterized in that** the end of the female pipe (9, 10) is widened in its inside diameter, **in that** the male pipe (3, 4) penetrates into this widened region, and **in that** the seal (7) provided at the "cold" end is clamped in place between the transition region (14) from the smaller to the larger inside diameter and the end of the male pipe (3, 4) by a force acting in the longitudinal axial direction.

3. The plug-in coupling as claimed in claim 1 or 2, **characterized in that** the safety valve (13) is connected to the annular gap (16) via a pipe length (12) let into the flange (11) of the female pipe (9, 10) in a gastight manner.

4. The plug-in coupling as claimed in one of claims 1 to 3, **characterized in that** the two flanges of the flange connections (5, 11) are elastically prestressed.

## Revendications

1. Accouplement enfichable pour conduits cryogéniques, comprenant au moins deux tubes (3, 4, 9, 10) enfichés l'un dans l'autre à la manière d'une connexion mâle/femelle en formant une fente annulaire (16), les tubes (3, 4, 9, 10) étant connectés l'un à l'autre de manière détachable par une connexion bridée (5, 11) située à leur extrémité "chaude", la fente annulaire (16) entre le tube extérieur (4) d'une partie mâle (1) et le tube intérieur (9) d'une partie femelle (2) étant étanchéifiée à l'extrémité "froide" par un joint d'étanchéité annulaire (7) et à l'extrémité "chaude" par un joint d'étanchéité annulaire (5d) se trouvant dans la région de la connexion bridée (5, 11), **caractérisé en ce que** la fente annulaire (16) est connectée dans la région de la connexion bridée (5, 11) à un clapet de sécurité (13).

2. Accouplement enfichable selon la revendication 1, **caractérisé en ce que** l'extrémité du tube femelle (9, 10) est élargie par rapport à son diamètre intérieur, **en ce que** le tube mâle (3, 4) pénètre dans cette région élargie et **en ce que** le joint d'étanchéité (7) prévu à l'extrémité "froide" est serré entre la région de transition (14) du plus petit au plus grand diamètre intérieur et l'extrémité du tube mâle (3, 4) par une force agissant dans la direction axiale longitudinale.

3. Accouplement enfichable selon la revendication 1 ou 2, **caractérisé en ce que** le clapet de sécurité (13) est connecté à la fente annulaire (16) par le biais d'une pièce tubulaire (12) incorporée de manière étanche aux gaz dans la bride (11) du tube femelle (9, 10).

4. Accouplement enfichable selon l'une quelconque des revendications 1 à 3, **caractérisé en ce que** les deux brides des connexions bridées (5, 11) sont précontraintes élastiquement.
